# DEMANDE DE BREVET EUROPEEN

(11) **EP 4 595 839 A1**
(43) Date de publication de la demande: **06.08.2025**
(21) Numéro de dépôt: 25155053.9
(22) Date de dépôt: 30.01.2025
(51) Int. Cl.: A47J 37/06

(54) **APPAREIL DE CUISSON MUNI D'UN PLATEAU EN MATIÈRE MINÉRALE SOLIDARISÉ À UN MONTANT PAR UNE LIAISON DÉMONTABLE**

(30) Priorité: 01.02.2024 FR 2401000
(71) Demandeur: Lagrange, 69390 Vourles (FR)
(72) Inventeur: CONDAMIN, Thibaud, 69007 Lyon (FR); ELIE, Jérôme, 69007 Lyon (FR); LAGRANGE, Clément, 69007 Lyon (FR)
(74) Mandataire: Opilex

(57) **Abrégé**

L'invention porte sur un [appareil de cuisson mobile (1), comprenant :
-un plateau en matière minérale (2) s'étendant selon un plan de réception (x, y), les directions parallèles à ce plan de réception étant des directions radiales, la direction normale à ce plan de réception étant une direction verticale (z), le plateau (2) comportant un premier évidement (21) selon la direction verticale positionné à proximité d'un de ses bords ;
-un montant (4) présentant une surface supérieure d'appui (41), le montant présentant un ergot (42) s'étendant en saillie verticalement par rapport à la surface supérieure d'appui (41) et en prise dans ledit évidement (21) ;
-une bride rapportée (3) comportant une fixation (31) solidaire du montant (4) et comportant un élément (32) de liaison surplombant une zone du plateau (2) en contact avec la surface supérieure d'appui (41), l'élément de liaison (32) étant solidaire de ladite fixation (31).

## Description

L'invention concerne de façon générale les appareils de cuisson, et en particulier les appareils de cuisson destinés à faire fondre du fromage de type appareil à raclette.

De tels appareils de cuisson sont le plus souvent utilisés pour faire fondre du fromage à raclette ou réchauffer d'autres aliments et disposent d'au moins un plateau en partie basse ou intermédiaire pour que plusieurs convives puissent positionner des coupelles remplies d'aliments sur ce plateau. Une résistance chauffante surplombe généralement ce plateau de chauffe afin de faire griller ou chauffer les aliments positionnés dans des coupelles sur ledit plateau. La résistance chauffante est le plus souvent surmontée d'un plateau supérieur, permettant à la fois de poser des objets sur l'appareil de cuisson et de concentrer le réchauffement vers le plateau de chauffe.

Certains appareils de cuisson utilisent un plateau supérieur en matière minérale, par exemple du verre, à la fois pour des raisons esthétiques et pour des raisons techniques. Un plateau en matière minérale s'avère par exemple très facile à nettoyer et présente une rigidité accrue et une usure réduite par rapport à un plateau en métal. Le plateau en verre peut offrir une transparence qui permet de garder la visibilité sur les aliments en cours de cuisson. Un tel plateau est supporté à ses extrémités par un ou plusieurs montants, ce qui permet de le maintenir surélevé par rapport à la surface d'une table et de le maintenir fixe.

Un procédé d'assemblage connu d'un plateau supérieur minéral à des montants consiste à les solidariser par de la colle. Si le procédé est a priori simple à mettre en oeuvre, il pose cependant un certain nombre de problèmes. La colle choisie doit correspondre au couple de matériaux du plateau et du montant et répondre aux contraintes mécaniques et thermiques imposées par l'appareil. La partie collée doit être masquée pour garantir une bonne esthétique de la liaison. Le temps de mise en oeuvre et de la colle est relativement important et impose une chaîne de production et une logistique conséquente. Le plateau n'étant pas démontable, il n'est pas possible à l'utilisateur de le laver facilement, certaines de ses parties pouvant être difficilement accessibles ou masquées par une autre partie de l'appareil. De plus, en cas de défaut durant l'assemblage ou en cas d'altération durant l'utilisation de l'appareil, il n'est pas possible de séparer le plateau du montant auquel il est fixé, ce qui limite la réparabilité de l'appareil. Cela pose également un problème en fin de cycle de vie, puisque le plateau ne peut pas aisément être séparé des montants. Etant constitués de matériaux différents et devant être traités différemment, cela limite la recyclabilité de l'appareil.

Le document FR2978654 décrit un appareil de cuisson mobile muni d'un plateau en manière minérale. Un montant de l'appareil comprend une rainure pleine pour accueillir un bord du plateau.

Le document https://www.amazon.com/DOKU-Adiustable-Stainless-Brackets-Bathroom/dp/B0829TKTV8/ref=sr 1 195?crid=1JX0959I7600&dib=eyJ2IjoiMSJ9 .aSeesIkaKjQqeZcM7UBbkFwk4 zmtI9O KV0XTdPTsh K5faBCdQuEOHWfArk b a2gHR7pzx1 JePBwSsCsp4n9ta7AqQNe5cFEudUzZxspE9eVBbv-qCgDXwZfvn0Ds3.jMRYoCRjQr810FqYvRppM96jGFK8-1 vuwYqtm5T1nM&dib taq=se&kevwords=qlass+clamp+stainless+steel+holder+ thick+qlass&qid=1719806515&refinements=p 36%3A1200-2000&rnid=1243644011&sprefix=glass+clamp+stainless+steel+holder+thick+glas s%2Caps%2C142&sr=8-195 décrit des éléments de liaison d'un plateau de verre à un meuble. Cet élément de liaison comprend notamment un profilé en U pour accueillir des plaques de verre de différentes épaisseurs. Des vis de compression traversent une face latérale du profilé pour immobiliser la plaque de verre contre une autre face du profilé.

L'invention vise à résoudre un ou plusieurs de ces inconvénients. L'invention porte ainsi sur un appareil de cuisson mobile, tel que défini dans les revendications annexées.

L'invention porte également sur les variantes des revendications dépendantes. L'homme du métier comprendra que chacune des caractéristiques des revendications dépendantes et de la description peut être combinée indépendamment aux caractéristiques d'une revendication indépendante, sans pour autant constituer une généralisation intermédiaire.

D'autres caractéristiques et avantages de l'invention ressortiront clairement de la description qui en est faite ci-après, à titre indicatif et nullement limitatif, en référence aux dessins annexés, dans lesquels :
[Fig.1] est une vue en perspective d'un exemple d'appareil de cuisson mobile ;
[Fig.2] est une vue de côté d'un montant de l'appareil de cuisson mobile ;
[Fig.3] est une vue en perspective du montant de la figure 2 ;
[Fig.4] est une vue en perspective de plateaux associés au montant de la figure 2 ;
[Fig.5] est une vue en perspective d'une bride de fixation d'un plateau supérieur ;
[Fig.6] est une vue en coupe de l'appareil de cuisson au niveau de la fixation du plateau supérieur.

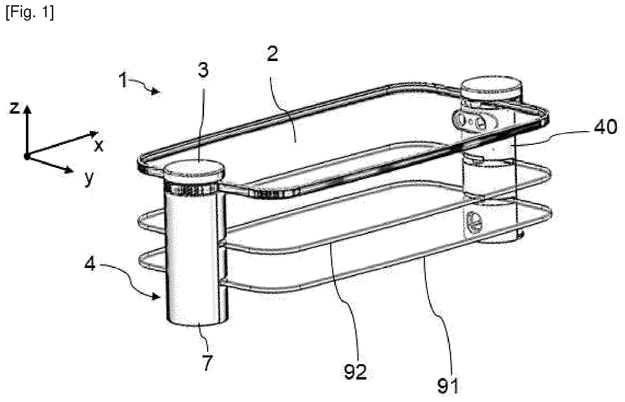

La figure 1 est une vue en perspective d'un appareil de cuisson mobile 1 selon un exemple de mode de réalisation de l'invention. L'appareil de cuisson mobile 1 est plus particulièrement destiné à cuire des lamelles de raclette ou d'autres aliments placés dans des coupelles. L'appareil 1 comprend notamment un plateau supérieur 2 et un montant 4. Dans l'exemple illustré et dans d'autres variantes envisageables, un tel appareil peut comprendre deux plateaux ou davantage, et/ou deux montants ou davantage.

Le plateau 2 est en matière minérale, par exemple en verre. Un tel plateau 2 est avantageux à la fois pour son esthétique et pour sa facilité de lavage. Le plateau 2 est destiné à être fixé au montant 4 de façon optimale. Le plateau 2 s'étend selon un plan de réception incluant les directions X, Y, les directions parallèles à ce plan de réception étant des directions radiales. La direction Z normale à ce plan de réception sera considérée comme une direction verticale. Le plateau 2 est destiné à surmonter une résistance de chauffage et peut recevoir des réceptacles à chauffer. Un espace est ménagé sous le plateau 2 pour l'introduction de coupelles à chauffer. Le plateau 2 peut avantageusement comprendre un cerclage métallique 20 ceinturant sa partie minérale plane, afin de la protéger contre d'éventuels chocs. Un tel cerclage métallique 20 peut également être saillant verticalement, afin de former un rebord pour retenir latéralement des réceptacles posés dessus.

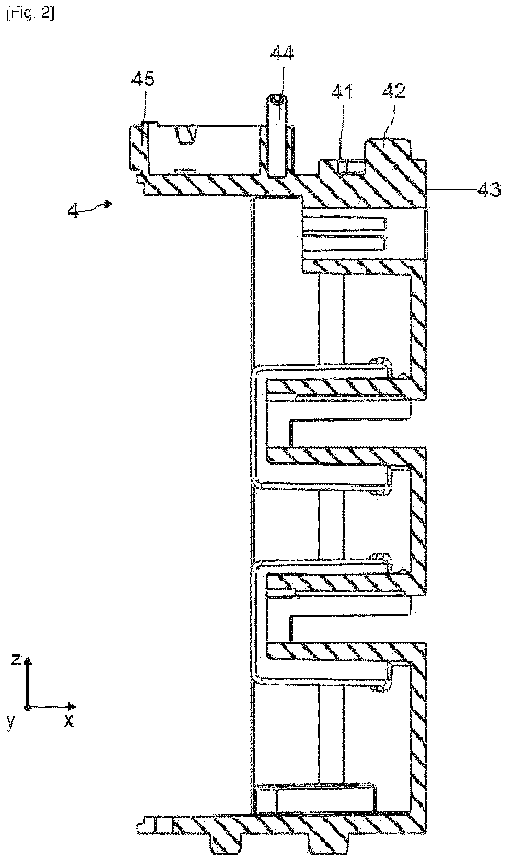

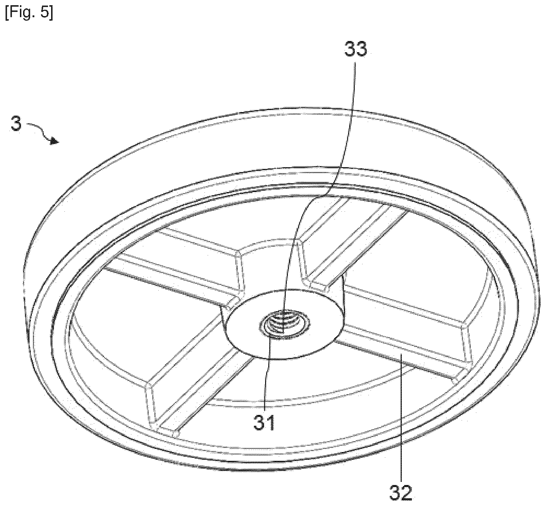

L'appareil 1 comprend en outre une bride rapportée 3, dont un exemple est illustré en perspective à la figure 5. Dans un souci de lisibilité, la bride 3 a été retirée sur les figures 2,3 et 4.

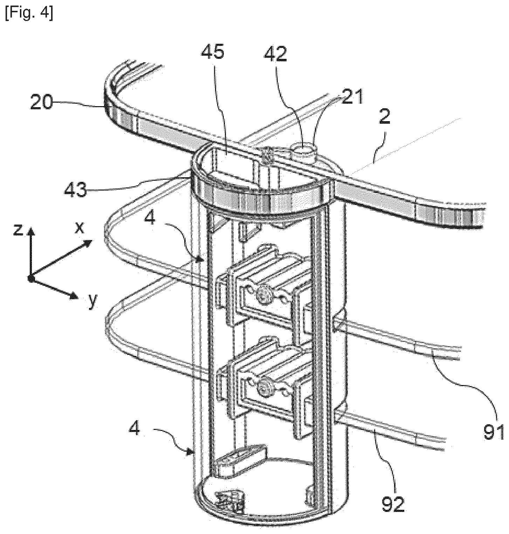

Comme illustré à la figure 4, le plateau 2 comporte un évidement 21 selon la direction verticale. Cet évidement 21 est positionné à proximité d'un des bords du plateau 2. L'évidement 21 peut être traversant ou borgne. L'évidement 21 peut être formé par tout moyen approprié dans le plateau 2.

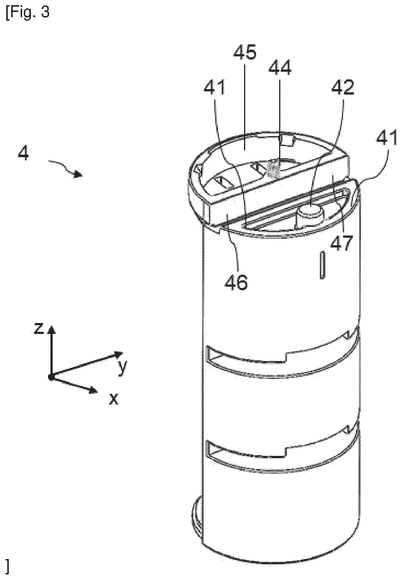

Les figures 2 et 3 sont respectivement des vues en coupe de côté et en perspective du montant 4. Le montant 4 présente une surface supérieure d'appui 41. La surface d'appui 41 peut être plane ou être formée par l'arête d'une nervure comme dans le cas illustré ici. La surface d'appui 41 est destinée à porter la surface du plateau 2 pour que celui-ci soit maintenu en position horizontale par le montant 4. Le montant 4 présente également un ergot 42 s'étendant en saillie verticalement par rapport à la surface supérieure d'appui 41. Comme illustré à la figure 4, l'ergot 42 est en prise dans l'évidement 21 du plateau 2. Les translations relatives entre le plateau 2 et le montant 4 selon les directions radiales sont ainsi bridées, sans nécessiter un collage.

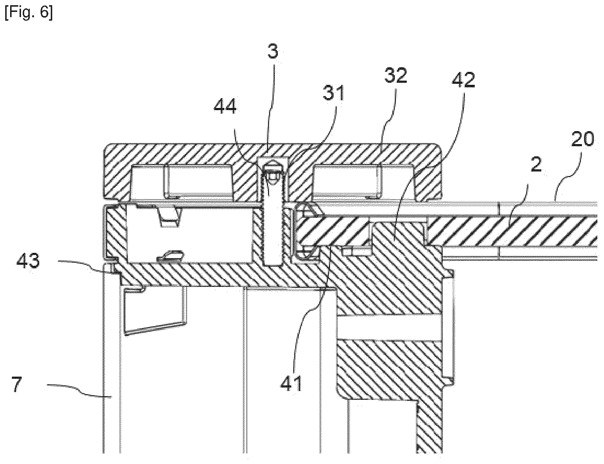

La bride 3 comporte une fixation 31 solidaire du montant 4 et comporte un élément de liaison 32 surplombant une zone du plateau 2 en contact avec la surface supérieure d'appui 41, comme illustré sur la vue en coupe de la figure 6. L'élément de liaison 32 comporte à cet effet une paroi périphérique servant à la fois de masquage et de surface de contact avec le plateau 2. Le bord du plateau 2 est alors positionné entre la surface d'appui 41 et l'élément de liaison 32 de la bride 3, de façon à empêcher le retrait de l'ergot 42 de l'évidement 21.

Ainsi, l'ergonomie d'assemblage de l'appareil de cuisson 1 est particulièrement avantageuse puisque le plateau 2 peut être positionné verticalement sur le sommet du montant 4 avant d'être bridé par la bride 3. De plus, le plateau 2 peut aisément être solidarisé au montant 4 en se dispensant de l'utilisation d'une colle et des multiples contraintes de conception associées, ainsi que du temps important de durcissement de la colle et de l'impossibilité de démontage de l'appareil 1 soit durant son assemblage, soit en fin de cycle de vie.

Dans l'exemple illustré à la figure 6, l'élément de liaison 32 est en contact avec le plateau 2, ici au niveau du cerclage 20. L'élément de liaison 32 forme ainsi un bridage supérieur. La surface d'appui 41 est en contact avec le plateau 2 au niveau de la partie en matière minérale. Le plateau 2 ne dispose ainsi d'aucun jeu vertical entre la bride 3 et le montant 4. On peut également envisager de ménager un espace vertical entre l'élément de liaison 32 et le plateau 2, par exemple pour permettre de gérer un différentiel de dilatation thermique entre le plateau 2 et la partie supérieure du montant 4. Avantageusement, afin d'éviter une séparation intempestive entre le plateau 2 et le montant 4, un tel espace sera inférieur à la hauteur de l'ergot 42, afin d'assurer que l'ergot 42 reste bien en prise dans l'évidement 21.

Afin d'assurer une tenue mécanique optimale du plateau 2 et éviter que celui-ci ne puisse être libéré par un mouvement de pivotement, l'élément de liaison 32 surplombe avantageusement l'ergot 42 pour bien emprisonner le bord du plateau 2.

Dans l'exemple illustré, la fixation 31 comprend un alésage fileté 33. L'alésage fileté 33 est ici ménagé dans une partie cylindrique du corps de la bride 3. L'alésage fileté peut être réalisé monobloc dans la bride 3 ou être formé par un insert métallique solidaire de la bride 3. Le montant 4 comporte ici une tige filetée 44 en saillie verticalement. L'alésage fileté 33 est vissé sur la tige filetée 44 comme illustré à la figure 6. La bride 3 peut ainsi être fixée manuellement et sans outils au montant 4.

Par un vissage approprié de la bride 3, on peut ainsi choisir de laisser un jeu entre le plateau 2 et la bride 3 ou au contraire d'appliquer un effort de compression sur le plateau 2, effort qui peut être dosé par rotation de la bride 3 autour de la tige filetée.

La tige filetée 44 peut être une partie métallique dont une extrémité est noyée dans la partie supérieure du montant 4, typiquement réalisée en matière synthétique.

Le montant 4 comporte un tronçon 43 dont la section transversale forme un contour fermé. La bride 3 comporte avantageusement une section transversale dont le contour est identique au contour de ce tronçon 43. Ainsi, la bride 3 peut former une continuité avec le montant 4, par exemple en étant affleurante avec le contour du montant 4. Avantageusement, le contour de la bride 3 est circulaire. Ainsi, quelle que soit la position en rotation de la bride 3 par rapport au montant 4, cette bride 3 pourra être dans la continuité du contour d'un montant 4 de forme cylindrique. A cet effet, la fixation 31 se trouve au centre de cette section circulaire. Par ailleurs, une bride 3 de forme circulaire permet de garantir un maintien de l'élément de liaison 32 au surplomb de la zone du plateau 2 placée en contact avec la surface supérieure d'appui 41.

Avantageusement, le montant 4 comporte un prolongement 45 en saillie verticalement par rapport à la surface supérieure d'appui 41. Ce prolongement 45 est ici formé comme un prolongement du tronçon 43. Ce prolongement comporte au moins deux points 46 et 47 distants l'un de l'autre et situé dans un même plan horizontal. Les points 46 et 47 sont ici des points espacés latéralement et présents sur une surface verticale du montant 4. Ces points 46 et 47 sont avantageusement positionnés à moins de 5 mm du plateau 2, de façon à brider un pivotement du plateau 2 autour de la direction verticale z. Dans cette configuration, le prolongement 45 est avantageusement formé d'un seul tenant avec le montant 4.

Avantageusement, un anneau élastique (non illustré) est interposé entre la surface supérieure d'appui 41 et le plateau 2 et ceinture l'ergot 42. L'anneau élastique permet par exemple de compenser les différences de coefficient de dilatation entre le plateau 2 et l'alésage fileté 33 et la tige filetée 44. L'anneau élastique permet aussi de protéger le plateau 2 en évitant le contact direct entre la matière minérale du plateau 2 et la matière synthétique du montant 4.

Avantageusement, afin de favoriser l'assemblage, les matériaux de la tige filetée 44 et de la fixation 31 comportent les mêmes valeurs à 20% près pour l'une quelconque des propriétés physiques suivantes : module d'élasticité, coefficient de frottement ou dureté de surface.

Dans l'exemple illustré aux figures 1 et 6, un capot externe 7 est associé au montant 4. Le capot externe 7 permet sélectivement d'accéder à l'intérieur du montant 4 ou de former avec celui-ci une forme cylindrique et d'en masquer l'intérieur.

Avantageusement, au moins un autre plateau est positionné sous le plateau supérieur 2 et fixé au montant 4. Dans cet exemple, les plateaux 91 et 92 sont positionnés à des niveaux différents sous le plateau 2 et sont fixés au montant 4. Le capot 7 permet notamment de masquer des mécanismes de fixation des plateaux 91 et 92 au montant 4, ces mécanismes de fixation étant illustrés à la figure 4. De tels mécanismes de fixation permettent notamment d'insérer les plateaux 91 et 92 depuis une face interne du montant 4, et d'assurer leur fixation depuis une face externe du montant 4. Les plateaux 91 et 92 comportent par exemple des évidements à proximité d'un de leurs bords, afin qu'un ergot de fixation puisse venir en prise pour les fixer au montant 4. Le capot 7 peut également présenter un accès pour du câblage électrique ou pour une interface de commande. Le capot 7 peut être réalisé affleurant avec le tronçon 43.

Avantageusement, le montant 4 s'étend d'un seul tenant entre les plateaux 2 et 91 ou entre les plateaux 2 et 92. Ainsi, un montant 4 venu de matière peut être utilisé pour assurer la fixation de ces deux plateaux. L'association de plusieurs plateaux avec le montant 4 participe à la rigidité d'ensemble de l'appareil de cuisson 1.

Dans l'exemple illustré à la figure 1, l'appareil 1 comporte un autre montant 40. Le plateau 2 (ainsi que les plateaux 91 et 92) sont également solidaires du montant 40. L'autre montant 40 comporte les mêmes caractéristiques mécaniques que le montant 4, en particulier les interfaces avec les plateaux 2, 91 et 92 et avec une bride 3. Des éléments de liaison identiques sont utilisés pour solidariser les plateaux 2, 91 et 92 au montant 40, de façon similaire à la fixation avec le montant 4. En particulier, le plateau 2 comporte un évidement positionné au niveau d'un bord opposé à l'évidement 21, cet évidement étant destiné à venir en prise avec un ergot du montant 40. On peut constater que l'association de plusieurs montants et plusieurs plateaux participe à la stabilité de la structure de l'appareil 1. Par ailleurs, cette conception permet de solidariser un plateau 2, 91 et 92 à un montant, alors que ce plateau est déjà solidarisé à un autre montant, garantissant une certaine stabilité en cours d'assemblage.

## Revendications

1. (Appareil de cuisson mobile (1), **caractérisé en ce qu'**il comprend :
- un plateau en matière minérale (2) s'étendant selon un plan de réception (x, y), les directions parallèles à ce plan de réception étant des directions radiales, la direction normale à ce plan de réception étant une direction verticale (z), le plateau (2) comportant un premier évidement (21) selon la direction verticale positionné à proximité d'un de ses bords ;
- un montant (4) présentant une surface supérieure d'appui (41), le montant présentant un ergot (42) s'étendant en saillie verticalement par rapport à la surface supérieure d'appui (41) et en prise dans ledit évidement (21) ;
- une bride rapportée (3) comportant une fixation (31) solidaire du montant (4) et comportant un élément (32) de liaison surplombant une zone du plateau (2) en contact avec la surface supérieure d'appui (41), l'élément de liaison (32) étant solidaire de ladite fixation (31).

2. Appareil de cuisson mobile (1) selon la revendication 1, dans lequel un espace vertical entre l'élément de liaison (32) et le plateau (2) est inférieur à la hauteur dudit ergot (42).

3. Appareil de cuisson mobile (1) selon la revendication 1 ou 2, dans lequel ledit élément de liaison (32) surplombe ledit ergot (42).

4. Appareil de cuisson mobile (1) selon l'une quelconque des revendications précédentes, dans lequel la fixation (31) comprend un alésage fileté (33), le montant comportant une tige filetée (44) en saillie verticalement et sur laquelle ledit alésage fileté (33) est vissé.

5. Appareil de cuisson mobile (1) selon l'une quelconque des revendications précédentes, dans lequel les matériaux de la tige filetée (44) et de la fixation (31) comportent les mêmes valeurs à 20% près pour l'une quelconque des propriétés physiques suivantes : module d'élasticité, coefficient de frottement ou dureté de surface.

6. Appareil de cuisson mobile (1) selon l'une quelconque des revendications précédentes, dans lequel le montant (4) comporte un tronçon (43) dont la section transversale (43) forme un contour fermé, ladite bride (3) comportant une section transversale dont le contour est identique au contour dudit tronçon (43).

7. Appareil de cuisson mobile (1) selon la revendication 6, dans lequel le contour de ladite bride (3) est circulaire.

8. Appareil de cuisson mobile (1) selon la revendication 6 ou 7, comportant en outre un prolongement (45) en saillie verticalement par rapport à la surface supérieure d'appui et formée dans le prolongement dudit tronçon (43), ledit prolongement (45) comportant au moins deux points distants (46, 47) l'un de l'autre et positionnés à moins de 5mm du plateau (2) de façon à brider un pivotement du plateau (2) autour d'une direction verticale (z).

9. Appareil de cuisson mobile (1) selon l'une quelconque des revendications précédentes, comprenant un anneau élastique interposé entre la surface supérieure d'appui (41) et le plateau (2) et ceinturant ledit ergot (42).

10. Appareil de cuisson mobile (1) selon l'une quelconque des revendications précédentes, comprenant un autre plateau (91) solidaire dudit montant (4), ledit montant (4) s'étendant d'un seul tenant entre lesdits plateaux (2, 91).
